# EUROPÄISCHE PATENTANMELDUNG

(11) **EP 2 607 843 A1**
(43) Veröffentlichungstag der Anmeldung: **26.06.2013**
(21) Anmeldenummer: 11194643.0
(22) Anmeldetag: 20.12.2011
(51) Int. Cl.: G01C 15/00, F16C 19/04, F16C 19/14

(54) **Laserbasiertes Koordinatenmessgerät mit einer Fest-Los-Lager-Vorrichtung**

(71) Anmelder: Leica Geosystems AG, 9435 Heerbrugg (CH)
(72) Erfinder: Fäs, Markus, CH-5727 Oberkulm (CH); Maksimovic, Veroljub, CH-4562 Biberist (CH)
(74) Vertreter: Kaminski Harmann

(57) **Zusammenfassung**

Laserbasierte Messvorrichtung zum Messen einer Position eines entfernten Ziels (85), insbesondere ausgestaltet als Lasertracker (1) zum Erfassen der Position und der Ausrichtung eines im Raum bewegbaren Messhilfsmittels (80), aufweisend eine eine Stehachse (9) definierende Basis (40), eine relativ zur Basis (40) um die Stehachse (9) drehbare Stütze (20), eine relativ zur Stütze (20) um eine Kippachse (8) drehbare Teleskopeinheit (10) mit Mitteln zum Aussenden eines Laserstrahls (36), eine erste Lager-Vorrichtung (60) zur Lagerung der Teleskopeinheit (10) an der Stütze (20), und eine zweite Lager-Vorrichtung (70) zur Lagerung der Stütze (20) an der Basis (40), dadurch gekennzeichnet, dass die erste Lager-Vorrichtung (60) als Fest-Los-Lager-Vorrichtung ausgestaltet ist, aufweisend eine Welle (63), deren Längsachse koaxial mit der Kippachse (8) verläuft, ein Festlager (61) und ein Loslager (62), und/oder die zweite Lager-Vorrichtung (70) als Fest-Los-Lager-Vorrichtung ausgestaltet ist, aufweisend eine Welle (73), deren Längsachse koaxial mit der Stehachse (9) verläuft, ein Festlager (71) und ein Loslager (72).

## Beschreibung

Die vorliegende Erfindung bezieht sich auf ein laserbasiertes Koordinatenmessgerät, insbesondere ausgestaltet als Lasertracker, zur Vermessung von Koordinaten auf Zielobjekten, umfassend mindestens eine Fest-Los-Lager-Vorrichtung für eine Welle einer rotierbaren Teleskopeinheit und/oder für eine Welle einer rotierbaren Stütze, sowie auf die Verwendung einer solchen Fest-Los-Lager-Vorrichtung für ein solches Koordinatenmessgerät.

Ein Koordinatenmessgerät eingangs genannter Art weist dabei eine Basis, die eine Stehachse definiert, eine Stütze und eine Teleskopeinheit zur Emission einer Messstrahlung und zum Empfang von zumindest einem Teil der an einem Ziel reflektierten Messstrahlung auf. Das Ausrichten der Teleskopeinheit erfolgt in zwei Achsen (Stehachse bzw. vertikale Achse und Neigungsachse bzw. Kippachse) mittels Motoren. Dabei ist die Stütze um die Stehachse relativ zur Basis motorisiert schwenkbar, und die Teleskopeinheit um eine Kippachse relativ zur Stütze. Durch eine Emissionsrichtung der Messstrahlung ist eine Messachse definiert.

Die Teleskopeinheit ist mit opto-elektro-mechanischen Komponenten ausgestattet und vermittels einer Welle um die Kippachse drehbar an einer oder zwei Lagerstellen an der Stütze gelagert, die gegebenenfalls ebenfalls mit opto-elektro-mechanischen Komponenten ausgestattet ist.

Aus der WO 2007/079600 A1 ist mit einem Lasertracker ein solches laserbasiertes Koordinatenmessgerät mit einer bezüglich mindestens zweier Achsen drehbaren Teleskopeinheit bekannt, in welcher eine Lichtaustritts- und Lichtempfangsoptik der Distanzmessvorrichtung, eine Messkamera und eine Übersichtskamera angeordnet sind. Das Teleskopelement ist um eine Kippachse drehbar an einem Stützelement gelagert, das Stützelement um eine Stehachse drehbar auf einer stationären Basis.

In aus dem Stand der Technik bekannten Koordinatenmessgeräten eingangs genannter Art ist entlang der Kippachse und/oder der Stehachse jeweils eine Welle beidseitig fest gelagert. Werden dabei, wie allgemein üblich, unterschiedliche Werkstoffe für Welle, Lager oder Stütze eingesetzt, ändert sich die Verspannung der Lager in Abhängigkeit des Temperatureinsatzbereichs. Der Kraftfluss, der durch das Verspannen der Lager der Kippachse entsteht, wird über die Holme der Stütze auf die Kippachse übertragen. Hystereseeffekte beeinflussen die Genauigkeit des Koordinatenmessgerätes negativ.

Ein radiales Verschieben der Achsen, beispielsweise durch Lagerluft, führt dabei zu Genauigkeitsverlusten.

Es ist deshalb eine Aufgabe der Erfindung, ein Lagerkonzept für ein Koordinatenmessgerät eingangs genannter Art zu schaffen, welches die Genauigkeit der Messung gegenüber dem Stand der Technik verbessert.

Diese Aufgabe wird in erfindungsgemässer Weise durch die laserbasierte Messvorrichtung mit einer Fest-Los-Lager-Vorrichtung gemäss Anspruch 1 und der Verwendung einer Fest-Los-Lager-Vorrichtung in einer laserbasierten Messvorrichtung gemäss Anspruch 15 gelöst. Vorteilhafte Ausgestaltungen der Erfindung finden sich jeweils in den abhängigen Ansprüchen.

Erfindungsgemäss weist ein laserbasiertes Koordinatenmessgerät entlang der Kippachse und/oder entlang der Stehachse eine mittels eines Fest-Los-Lagers gelagerte Welle auf.

Bevorzugt weist dabei eine um die Stehachse drehbare Stütze des Koordinatenmessgerätes eine in einer Basis mittels eines Fest-Los-Lagers gelagerte Welle auf. Weiterhin bevorzugt weist eine um die Kippachse drehbare Teleskopeinheit des Koordinatenmessgerätes eine an der Stütze mittels eines Fest-Los-Lagers gelagerte Welle auf.

Die Vorteile dieser erfindungsgemässen Fest-Los-Lagerung gegenüber dem Stand der Technik sind insbesondere die folgenden:
● Am Festlager tritt kein axiales und radiales Spiel auf;
● eine, beispielsweise temperaturbedingte, Ausdehnung der Welle ist unkritisch;
● die axiale Position ist unter axialer Belastung genau definiert, und
● der Lauf der Welle ist sehr präzise.

Bei der erfindungsgemässen Fest-Los-Lagerung der Welle wird die Aufnahme der axialen Kräfte in beide Richtungen durch ein einzelnes Lager oder eine Lagergruppe, das sogenannte Festlager, übernommen. Neben den axialen Kräften nimmt das Festlager auch radiale Kräfte auf und leitet diese an angrenzende Bauteile der Stütze weiter. Dadurch werden die Nachteile einer reinen Festlagerung behoben, ohne dass dabei Genauigkeitseinbussen, wie zum Beispiel durch Taumeln auftreten.

Erfindungsgemäss erfolgt die Verspannung des Lagers (bzw. einer Lagergruppe) lediglich einseitig. Achsfehler infolge von Temperatureinflüssen und die daraus resultierenden Genauigkeitsverluste werden so minimiert. Ausserdem ist eine temperaturbedingte Ausdehnung der Welle unkritisch und beeinflusst eine Verspannung des Lagers nicht. Die Verspannung der Lager bleibt dadurch über den gesamten Temperatureinsatzbereich konstant. Die Anschlussteile werden von dem verspannten Lager kleinstmöglich tangiert, wodurch Hystereseeffekte minimiert werden. Das komplette Achssystem weist eine hohe Steifigkeit aus.

Das Festlager weist ein oder mehrere Kugellager auf, insbesondere Wälzlager. Vorzugsweise werden zwei Wälzlager paarweise eingebaut. Dies kann zum Beispiel mittels eines Duplex-Lagers realisiert werden, das sich aus zwei gepaarten Wälzlagern mit identischen Toleranzbereichen zusammensetzt. Die Verspannung des Duplex-Lagers erfolgt einseitig. Der Aufbau erfolgt bei einer sogenannten O-Anordnung durch axiales Vorspannen auf Block der Innenringe, bzw. der Aussenringe im Falle einer sogenannten X-Anordnung. Mit der Breite der Aussen- bzw. Innenringe lässt sich die gewünschte Vorspannung durch die vorgängige Bearbeitung definieren.

Das Festlager kann alternativ auch zwei einzelne Wälzlager aufweisen. Der Zusammenbau erfolgt durch axiales Vorspannen der Innenringe bei der O-Anordnung, bzw. der Aussenringe bei der X-Anordnung. Mit einem Zwischenring und einem Federpaket lässt sich der Aussen- bzw. Innenring verspannen. Mit dem Federpaket lässt sich die Vorspannung variabel einstellen.

Das Loslager ist erfindungsgemäss nur zur Aufnahme radialer Kräfte bestimmt, wobei die radiale Belastung auf das Loslager und das Festlager verteilt wird. Das Loslager nimmt keine axialen Kräfte auf und ist in axialer Richtung beweglich. Alternativ kann auch ein relativ zur Stütze unbewegliches Loslager verwendet werden, das eine axiale Bewegung der Welle zulässt. Die Laufbahnen sind zylindrisch ausgeführt, damit ein axiales Verschieben der Welle möglich ist. Beide Laufflächen weisen eine hohe Härtegüte auf. Das Loslager weist vorzugsweise ein Kugellager mit einem Kugelkäfig auf, der insbesondere mehrere gegenüber einander leicht versetzte Reihen Kugeln aufweisen kann, sodass jede Kugel ihre eigene Laufbahn beschreibt. Dies ist unter anderem vorteilhaft, um Verschleiss vorzubeugen, und verhindert im Falle einer Schockbeschädigung einer Laufbahn, dass mehrere bzw. alle Kugeln auf einer fehlerbehafteten Laufbahn laufen.

Der Grad der Verspannung des Loslagers erfolgt über die Bearbeitung der Anschlussteile. Der Wälzkörper weist gegenüber der Innen- und Aussenlauffläche ein gewisses Übermass auf. Durch den Zusammenbau von Wälzkörper, Welle und Flansch wird das Lager verspannt. Die Verspannung ist so gewählt, dass ein optimales Abrollen der Wälzkörper gewährleistet ist.

In einer besonders bevorzugten Ausführungsform ist ein erstes Fest-Los-Lager auf zwei Holme der Stütze dergestalt verteilt, dass die Welle auf einer Seite der Teleskopeinheit mit einem Festlager und auf der anderen Seite mit einem Loslager gelagert ist.

Da aufgrund der sehr hohen Genauigkeitsanforderungen bei Koordinatenmessgeräten keine Lagerluft toleriert werden kann, sind sowohl das Loslager als auch das Festlager vorzugsweise vorgespannt - das Loslager radial, das Festlager sowohl axial als auch radial.

Die Wälzlager werden vorzugsweise nicht direkt in angrenzende Bauteile der Holme aus Aluminium montiert oder eingespannt, sondern in Anschlussteile aus Stahl. Dadurch bleibt die gewählte Passung zwischen Lager und Flansch über den gesamten Temperatureinsatzbereich erhalten. Die Anschlussteile aus Stahl werden fest mit den Bauteilen aus Aluminium verbunden. Achsfehler infolge von Temperatureinflüssen und die daraus resultierenden Genauigkeitsverluste werden minimiert.

Sofern das Festlager zur Aufnahme axialer Kräfte ausgelegt ist, die in jeder Ausrichtung der Messvorrichtung durch das Eigengewicht der Messvorrichtung auftretende Kräfte übersteigen, ermöglicht die erfindungsgemässe Lagerung darüber hinaus eine zum Lot geneigte Aufstellung des Koordinatenmessgerätes, ohne dass es zu einem Taumeln der Achse kommt. Sogar eine Über-Kopf-Aufstellung, bei der die Stütze an der Basis hängt, ist möglich.

Als Wälzlager können auch sogenannte Hybrid-Lager eingesetzt werden, in welchen die Wälzkörper aus Keramik anstatt aus Stahl verbaut werden. Hauptvorteil dieser Lösung ist eine höhere mögliche Genauigkeit durch höhere Genauigkeitsklassen. Nicht wiederholbare Fehler, zum Beispiel Taumelfehler oder Hystereseeffekte, werden dadurch minimiert. Dies wirkt sich direkt auf die Genauigkeit des Koordinatenmessgerätes aus. Ausserdem weist Keramik im Vergleich zu Stahl einen niedrigeren Reibungskoeffizienten auf, weshalb sich je nach Betriebsart die Lebensdauer eines solchen Lagers erhöhen lässt. Hybrid-Lager haben darüber hinaus bessere Notlaufeigenschaften.

Bevorzugt ist des weiteren ein Motor vorgesehen, der insbesondere im das Festlager enthaltenden Holm untergebracht ist und der dazu vorgesehen ist, die Welle an der festgelagerten Seite anzutreiben. Insbesondere ist dafür vorteilhaft ein Motor mit Direktantrieb (Direct-Drive-Motor) - also ein Motor ohne zwischengeschaltetes Getriebe, zum Beispiel ein Piezomotor - einsetzbar, um Fehler durch Spiel im Getriebe vermeiden zu können.

Weiterhin bevorzugt ist ein eine Winkelmessfunktionalität zur Bestimmung einer Ausrichtung der Teleskopeinheit relativ zur Basis vorgesehen, insbesondere ein Winkelencoder, der im das Loslager enthaltenden Holm untergebracht ist und der dazu vorgesehen ist, absolute oder relative Positionen der Welle zu ermitteln.

Die Welle kann zur Gewichtseinsparung vorzugsweise als Hohlwelle ausgestaltet sein. Dies erlaubt ausserdem, im Innern der Welle Versorgungsleitungen in die Teleskopeinheit zu führen. Dabei handelt es sich insbesondere um Kabel zur Versorgung von Komponenten der Teleskopeinheit mit elektrischem Strom oder um Lichtleiter zum Einleiten eines Laserstrahles in optische Komponenten der Teleskopeinheit. Letzteres ist insbesondere dann notwendig, wenn die Distanzmessvorrichtung ganz oder teilweise ausserhalb der Teleskopeinheit untergebracht ist, oder der Laserstrahl ausserhalb der Teleskopeinheit erzeugt wird, beispielsweise durch ein Lasermodul in der Stütze.

Da die Welle entlang der Kippachse verläuft, schneidet sie eine - vorzugsweise orthogonal zur Kippachse verlaufende - Messachse. In einer bevorzugten Ausführungsform weist die Welle daher an dieser Stelle einen Durchlass für einen Strahlgang der optischen Distanzmesseinheit auf.

Alternativ kann die Welle auch aus zwei Teilen bestehen, die die Teleskopeinheit auf beiden Seiten mit der Stütze verbinden. Ein erster Teil der Welle ist dann am Festlager gelagert und mit der zugewandten Seite der Teleskopeinheit verbunden, während ein zweiter Teil der Welle am Loslager gelagert und mit der anderen Seite der Teleskopeinheit verbunden ist. Die Welle ist dann im Innern der Teleskopeinheit unterbrochen, was insbesondere aus Platzgründen vorteilhaft sein kann. Die Stabilität und Steifigkeit der Lagerung muss allerdings durch Bauteile der Teleskopeinheit sichergestellt werden.

In einer alternativen Ausführungsform kann das Loslager auch als Gleit-, Luft- oder Magnetlager ausgeführt werden. In einer weiteren alternativen Ausführungsform kann auch auf das Loslager verzichtet werden. In diesem Fall wird die Welle ausschliesslich einseitig mit einem einzigen Festlager gelagert.

Weitere Vorteile und Kennzeichen der Erfindung sind aus der folgenden Beschreibung von derzeit bevorzugten Ausführungsformen im Zusammenhang mit den anhängenden Figuren ersichtlich. In den Figuren zeigt schematisch:
Fig. 1 ein erfindungsgemässes Koordinatenmessgerät und ein Messhilfsmittel;
Fig. 2 ein erfindungsgemässes Koordinatenmessgerät in einer Frontansicht;
Fig. 3a eine erste Ausführungsform eines erfindungsgemässen Koordinatenmessgerätes im Querschnitt mit einer Darstellung zweier Fest-Los-Lager-Vorrichtungen.
Fig. 3b eine zweite Ausführungsform eines erfindungsgemässen Koordinatenmessgerätes im Querschnitt mit einer Darstellung einer Fest-Los-Lager-Vorrichtung;
Fig. 4a einen Querschnitt durch die Welle und das Festlager;
Fig. 4b einen Querschnitt durch die Welle und das Loslager;
Fig. 5a-b zwei Ausführungsformen des Kugelkäfigs eines erfindungsgemässen Loslagers;
Fig. 6a-b zwei Ausführungsformen eines erfindungsgemässen Festlagers; und
Fig. 7 den Aufbau eines vertikalen Fest-Los-Lagers zur Lagerung der Stütze an der Basis.

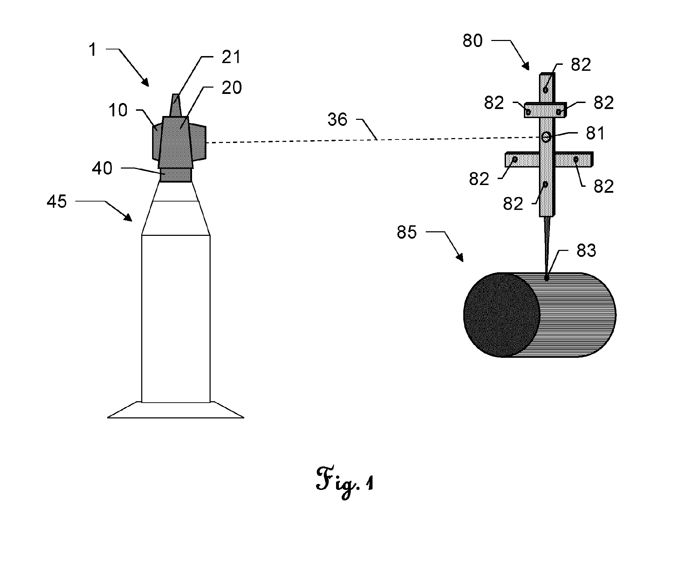

Figur 1 zeigt ein als Lasertracker 1 ausgestaltetes erfindungsgemässes Koordinatenmessgerät, umfassend eine Basis 40, eine darauf angebrachte Stütze 20 mit einem Griff 21 und eine an zwei (nicht dargestellten) Holmen der Stütze 20 gelagerte Teleskopeinheit 10. Der abgebildete Lasertracker 1 ist auf einem Stativ 45 angeordnet und misst mittels eines Laserstrahles 36 die Distanz zu einem auf einem Messhilfsmittel 80 befindlichen Retroreflektor 81.

Das Messhilfsmittel 80 - hier beispielhaft als Messtaster ausgeführt - umfasst weiterhin eine Anzahl Zielmarkierungen 82, beispielsweise in Form von reflektierenden oder selbstleuchtenden Lichtpunkten, sowie einen Messkopf 83 zum Plazieren auf einem zu vermessenden Zielpunkt eines Zielobjektes 85.

Der Lasertracker 1 beinhaltet eine Messkamera, die insbesondere als fokussierbares Vario-Kamerasystem mit variabler Vergrösserung ausgestaltet ist, um die auf dem Messhilfsmittel 80 angeordneten Zielmarkierungen 82 zu erfassen. Anhand der von der Messkamera aufgenommenen Positionen der Zielmarkierungen 82 ist die räumliche Ausrichtung des Messhilfsmittels 80 bestimmbar.

Um Bewegungen des Messhilfsmittels 80 zu erkennen und nachvollziehen zu können, sodass der Laserstrahl 36 auf den Retroreflektor 81 ausgerichtet bleibt, weist der Lasertracker 1 einen positionssensitiven Detektor (PSD) auf, insbesondere einen Tracking-Flächensensor, wie er beispielsweise in der WO 2007/079600 A1 geoffenbart ist.

Der PSD ist vorzugsweise in der Teleskopeinheit 10 angeordnet und ermöglicht durch ein Erfassen der Ausrichtung des von einem Ziel, insbesondere dem Retroreflektor 81, reflektierten Laserstrahls 36 das Nachführen der Ausrichtung des Laserstrahls 36. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden.

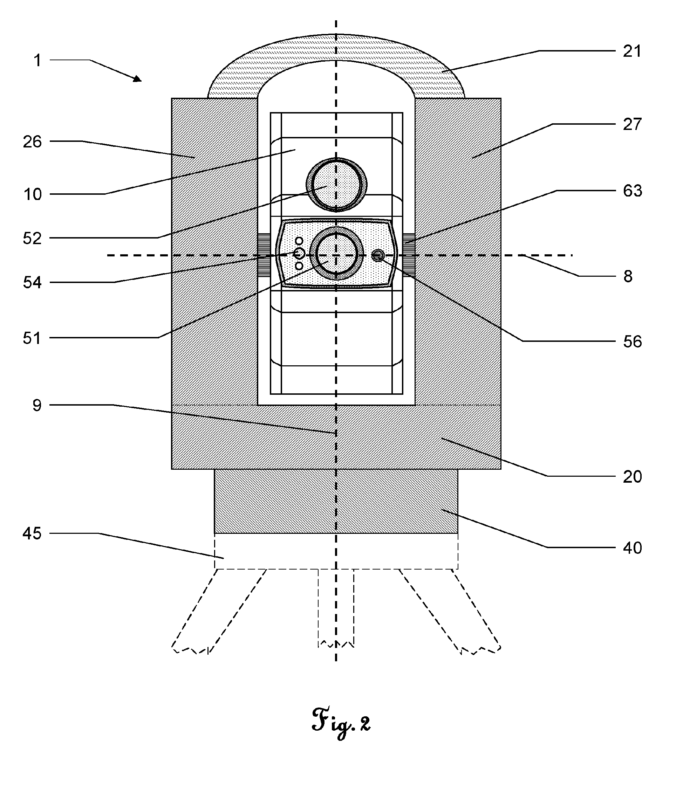

Figur 2 zeigt eine beispielhafte Ausführungsform eines als Lasertracker 1 ausgestalteten erfindungsgemässen Koordinatenmessgerätes in einer Frontalansicht. Der Lasertracker 1 umfasst eine Basis 40, die auf einer Haltevorrichtung befestigbar ist, hier dargestellt in Form eines Stativs 45. Auf der Basis 40 ist eine Stütze 20 um die Vertikalachse 9 drehbar gelagert angebracht. Die Stütze 20 umfasst einen ersten Holm 26 und einen zweiten Holm 27, die von der Stütze 20 aus nach oben ragen und an welchen eine Teleskopeinheit 10 mittels einer Welle 63 um die Horizontalachse 8 kippbar gelagert ist. An den beiden Holmen 26,27 ist ein Griff 21 für den Transport und die Handhabung des Lasertrackers 1 angebracht. Der Griff 21 kann fest mit den Holmen 26,27 verbunden sein, beispielsweise aus einem Guss mit diesen hergestellt oder angeschweisst sein, so dass er als zusätzlich stabilisierendes Element für die Holme 26,27 dient, insbesondere hinsichtlich eines Verbiegens.

An der Teleskopeinheit 10 sind in dieser beispielhaften Ausführungsform mehrere Optiken vorgesehen, insbesondere eine Optik 52 einer Messkamera, sowie eine Laseraussende-und -empfangsoptik 51 einer optischen Distanzmessvorrichtung. Des weiteren weist die Teleskopeinheit 10 vorzugsweise eine Optik einer Lokalisierungskamera 54 zur Groblokalisierung des Messhilfsmittels 80 und eine Optik einer Übersichtskamera 56 zur Bereitstellung von Bildern für einen Benutzer auf.

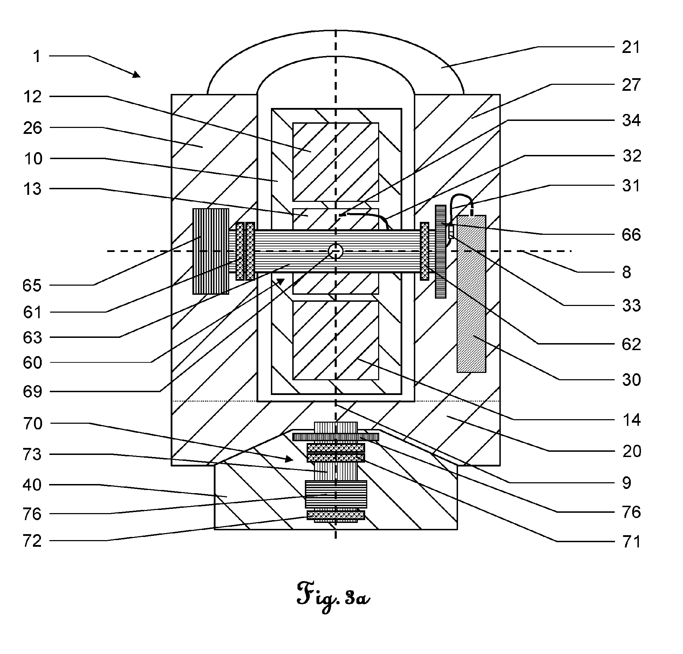

Figur 3a zeigt in einem Querschnitt durch den Lasertracker 1 aus Figur 2 eine Ansicht einer ersten Ausführungsform einer erfindungsgemässen ersten Fest-Los-Lager-Vorrichtung 60 an der Aufhängung der Teleskopeinheit 10 und einer erfindungsgemässen zweiten Fest-Los-Lager-Vorrichtung 70 an Stütze 20 und Basis 40. Die Teleskopeinheit 10 weist in ihrem Innern verschiedene optische Komponenten auf, darunter eine Messkamera 12 zur Erfassung einer räumlichen Ausrichtung des Messhilfsmittels 80 und eine optische Distanzmessvorrichtung mit einem Interferometer 13 und einem Absolutdistanzmesser 14 zur Messung der Distanz zum Messhilfsmittel 80. Die Messkamera 12 ist als fokussierbares Vario-Kamerasystem mit variabler Vergrösserung ausgestaltet.

Die erste Fest-Los-Lager-Vorrichtung 60 ermöglicht eine Drehbarkeit der Teleskopeinheit 10 um die Kippachse 8 und beinhaltet eine in den beiden seitlichen Holmen 26,27 gelagerte Welle 63, wobei im ersten Holm 26 ein Festlager 61 und im zweiten Holm 27 ein Loslager 62 bereitgestellt wird. Im ersten Holm 26 ist zudem ein Direct-Drive-Motor 65 dazu vorgesehen, die Welle 63 rotativ anzutreiben. Im zweiten Holm 27 ist ein Winkelencoder 66 dazu vorgesehen, relative und/oder absolute Positionen der Welle 63 zu erfassen, um eine aktuelle Ausrichtung der Teleskopeinheit 10 zu bestimmen.

Die Welle 63 ist vorzugsweise aus Stahl, Messing oder Keramik gefertigt und ist im wesentlichen zylindrisch, insbesondere weist sie an den Lagern 61,62 zylindrische Laufflächen auf. Die Welle 63 ist hohl, wodurch sie dazu geeignet ist, Versorgungsleitungen wie Kabel oder Lichtleiter 31,32 aufzunehmen. Die Welle 63 weist in Richtung einer durch eine Emissionsrichtung der Messstrahlung definierten, insbesondere zur Kippachse 8 und zur Stehachse 9 orthogonal verlaufenden, Messachse einen vertikalen Durchlass 69 auf, insbesondere für einen Strahlgang der optischen Distanzmessvorrichtung.

In die Stütze 20, bzw. in einen der Holme 26,27 ist ein Lasermodul 30 integriert, vorzugsweise ein Helium-Neon-Lasermodul, hier dargestellt im zweiten Holm 27. Ein eine erste Faser 31 und eine zweite Faser 32 aufweisendes Lichtleitersystem führt von diesem Lasermodul 30 durch die Welle 63 hindurch in die Teleskopeinheit 10 bis zu einem Kollimator 34 des Interferometers 13. Dabei ist die im ersten Holm 27 verlaufende erste Faser 31 des Lichtleitersystems über eine vorzugsweise im ersten Holm 27 vorgesehene Steckerverbindung 33 mit der in der Teleskopeinheit 10 verlaufenden zweiten Faser 32 des Lichtleitersystems verdrehungsfrei verbunden. Die Steckerverbindung 33 in der Nähe des Lasermoduls 30 in der Stütze 20 anzuordnen hat den Vorteil, dass das Lasermodul 30 mitsamt der ersten Faser 31 leichter austauschbar ist.

Die zweite Fest-Los-Lager-Vorrichtung 70 ermöglicht eine Drehbarkeit der Stütze 20 um die Stehachse 9 und beinhaltet eine in der Basis 40 gelagerte und an der Stütze befestigte Welle 73, wobei im oberen, der Stütze 20 zugewandten Teil der Basis 40 ein Festlager 71 und im unteren Teil ein Loslager 72 bereitgestellt wird. Am Loslager 72 ist ein Direct-Drive-Motor 75 dazu vorgesehen, die Welle 73 rotativ anzutreiben. Am Festlager 71 ist ein Winkelencoder 76 dazu vorgesehen, relative und/oder absolute Positionen der Welle 73 zu erfassen, um eine aktuelle Ausrichtung der Stütze 20 zu bestimmen.

Obwohl diese Ausführungsform zwei Fest-Los-Lager-Vorrichtungen beinhaltet, ist es ebenso denkbar, dass nur eine Lager-Vorrichtung als Fest-Los-Lager-Vorrichtung ausgestaltet ist.

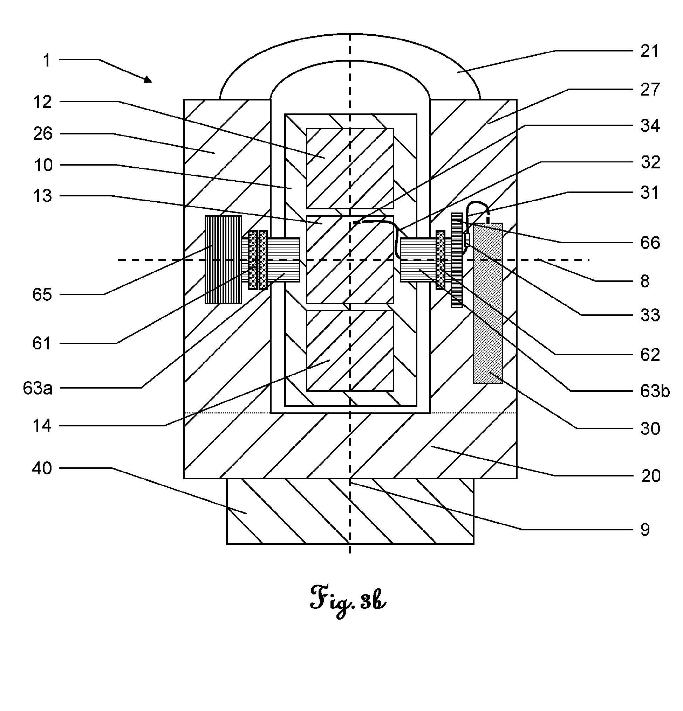

Figur 3b stellt eine zweite erfindungsgemässe Ausführungsform der erfindungsgemässen ersten Fest-Los-Lager-Vorrichtung 60 in einem Querschnitt durch einen Lasertracker 1 dar. Im Unterschied zur in Figur 3a dargestellten Ausführungsform besteht die Welle aus einem ersten Teil 63a und einem zweiten Teil 63b. Radiale und axiale Kräfte müssen in diesem Fall über Bauteile der Teleskopeinheit 10 übertragen werden. Diese Bauteile sind daher vorzugsweise besonders stabil und steif ausgebildet. Insbesondere können sie aus demselben Material wie die Welle bestehen. Eine zweite Fest-Los-Lager-Vorrichtung 70 ist in dieser beispielhaften Ausführungsform nicht dargestellt, optional aber möglich.

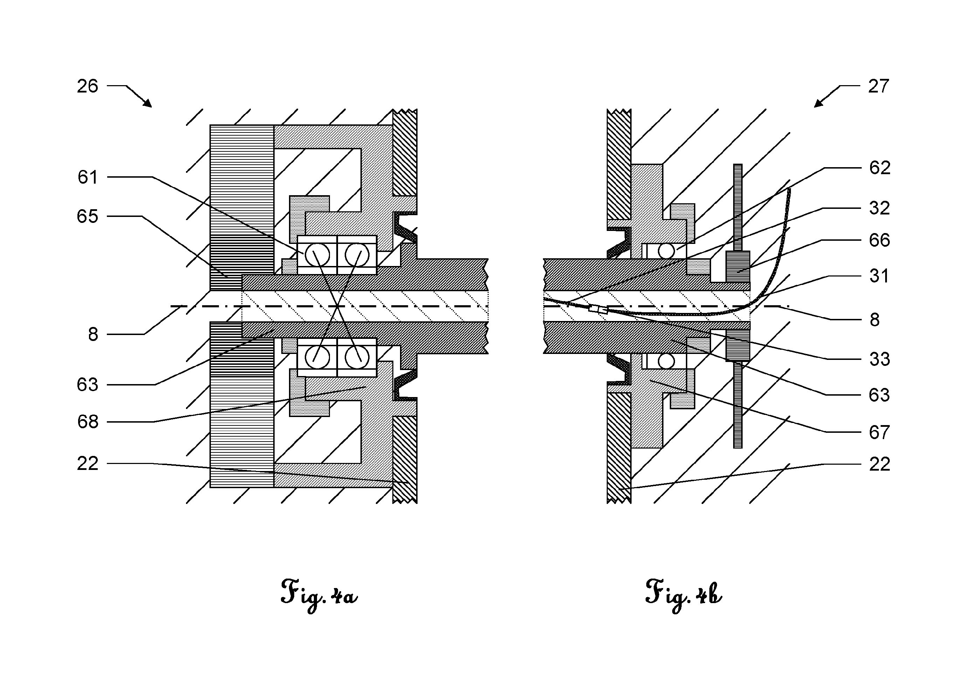

In den Figuren 4a und 4b ist jeweils im Querschnitt ein Teil der Welle 63 der ersten Fest-Los-Lager-Vorrichtung 60 mit seiner jeweiligen Lagerung in den Holmen 26,27 dargestellt. Figur 4a zeigt die Lagerung am ersten Holm 26 mit dem Festlager 61, Figur 4b zeigt die Lagerung am zweiten Holm 27 mit dem Loslager 62. Die Welle 63 ist hohl und weist an den Lagerungen eine zylindrische Form auf.

Das in Figur 4a dargestellte Festlager 61 weist zwei paarweise angeordnete Wälzlager auf, insbesondere ein Duplex-Spindellagerpaar oder ein UKF^{®}-Spindellager mit Trennkugeln. Dargestellt ist beispielhaft eine X-Anordnung der paarweise angeordneten Wälzlager.

Das in Figur 4b dargestellte Loslager 62 weist ein Kugellager mit einem Kugelkäfig auf, das zur Aufnahme radialer Kräfte bestimmt ist. Das Loslager 62 ist an der Welle 63 fixiert und im Holm 27 in axialer Richtung beweglich angeordnet, um sich bei temperaturbedingten Ausdehnungsschwankungen der Welle 63 mit dieser spannungsfrei mitbewegen zu können. Der Wälzkörper des Loslagers 62 weist gegenüber der Innen- und Aussenlauffläche ein gewisses Übermass auf. Beide Laufflächen haben eine hohe Härtegüte.

Die Lager 61,62 sind nicht direkt in angrenzende, insbesondere aus Aluminium bestehende, Leichtbauteile der Holme 26,27 montiert, sondern in Anschlussteile 67,68 aus Stahl. Dadurch bleibt die gewählte Passung zwischen Lager und Flansch über den gesamten Temperatureinsatzbereich erhalten. Die stählernen Anschlussteile 67,68 werden fest mit Bauteilen 22 der Holme 26,27 verbunden. Achsfehler infolge von Temperatureinflüssen und daraus resultierende Genauigkeitsverluste werden so minimiert.

In Figur 4b ist ausserdem ein optionales, durch die hohle Welle 63 geführtes Lichtleitersystem dargestellt. Dieses weist eine zweite Faser 32, die in die Teleskopeinheit führt, eine erste Faser 31, die zu einem Lasermodul im zweiten Holm 27 führt, und eine Steckerverbindung 33 zur verdrehungsfreien Verbindung der beiden Fasern auf. Die Steckerverbindung 33 ist in dieser beispielhaften Ausführungsform innerhalb der Welle 63 angeordnet.

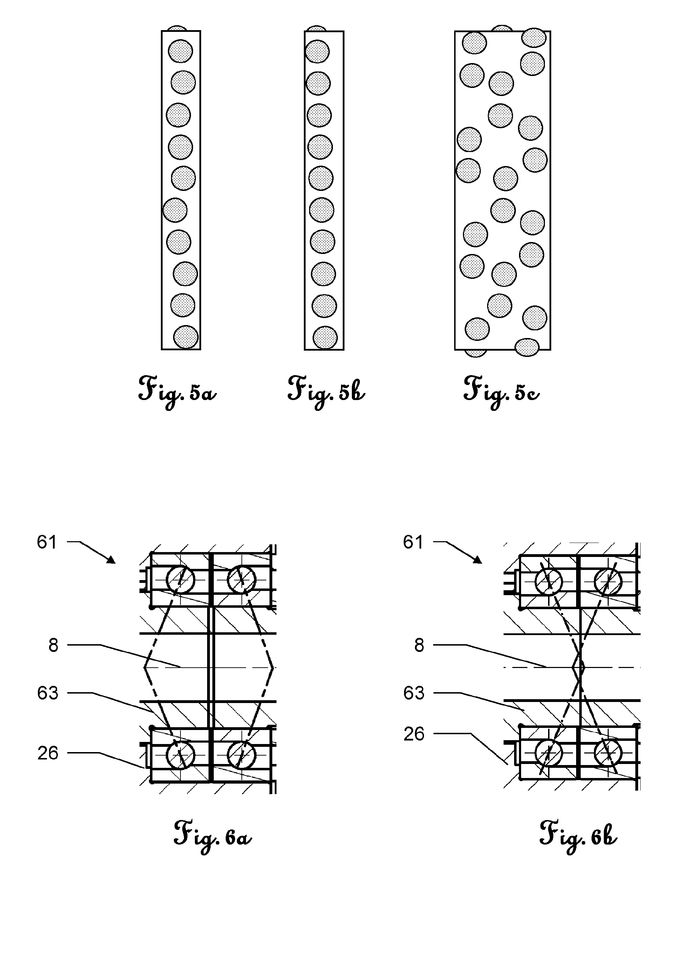

Die Figuren 5a bis 5c stellen jeweils eine beispielhafte Ausführungsform eines Kugelkäfigs des Loslagers 62,72 in einer Seitenansicht dar. Die Kugeln des Kugelkäfigs bestehen aus Stahl oder Keramik und sind jeweils leicht versetzt zueinander angeordnet, sodass jede Kugel ihre eigene Laufbahn beschreibt. Dies ist vorteilhaft, um Verschleiss vorzubeugen, und verhindert im Falle einer Schockbeschädigung einer Laufbahn, dass mehrere bzw. alle Kugeln auf einer fehlerbehafteten Laufbahn laufen.

In den Figuren 6a und 6b sind zwei beispielhafte Ausführungsformen des Festlagers 61 der ersten Fest-Los-Lager-Vorrichtung 60 dargestellt. Gezeigt wird jeweils ein Ausschnitt um das Festlager 61 mit einem Abschnitt der Welle 63 und dem umgebenden ersten Holm 26. Ebenfalls dargestellt ist die Kippachse 8. Entsprechendes gilt für das Festlager 71 der zweiten Fest-Los-Lager-Vorrichtung 70.

Figur 6a zeigt dabei eine erste Ausführungsform des Festlagers 61 mit zwei gepaarten Wälzlagern in einer sogenannten O-Anordnung. Die Verbindungslinien der Kugel-Kontaktpunkte gehen in Richtung der Welle 63 auseinander. Damit erhält man eine grössere Stützweite, was die Einheit sehr starr macht. Die O-Anordnung erlaubt umkehrbare, axiale und radiale Belastungen und sorgt für ein geringeres Kippspiel.

Figur 6b zeigt eine zweite Ausführungsform des Festlagers 61 mit zwei gepaarten Wälzlagern in einer sogenannten X-Anordnung. Die Verbindungslinien der Kugel-Kontaktpunkte konvergieren in Richtung der Welle 63. Damit erhält man eine kleinere Stützweite, was zu einer reduzierten Winkelsteifigkeit der Einheit führt. Die X-Anordnung lässt grössere Fluchtabweichungen zu und erlaubt ebenfalls umkehrbare, axiale und radiale Belastungen.

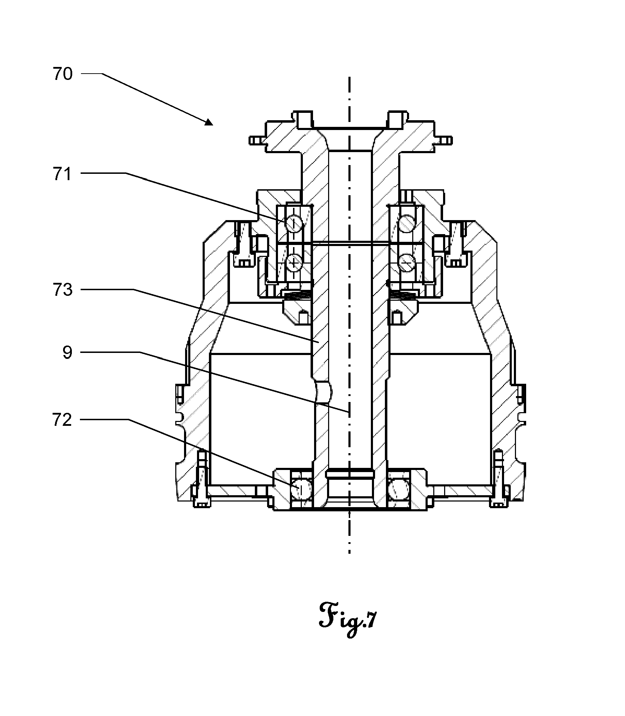

In Figur 7 wird die Anordnung von Festlager 71 und Loslager 72 einer erfindungsgemässen zweiten Fest-Los-Lager-Vorrichtung 70 eines als Lasertracker 1 ausgestalteten erfindungsgemässen Koordinatenmessgerätes gezeigt, mittels welcher die Stütze 20 um die Stehachse 9 drehbar an der Basis 40 angebracht wird (siehe auch Figur 3a). Dabei wird eine an der Stütze 20 befestigte Welle 73 mit einem Festlager 71 und einem Loslager 72 an der Basis 40 gelagert. Die Welle 73 ist, wie dargestellt, vorzugsweise eine Hohlwelle. Das Festlager 71 befindet sich vorzugsweise am der Stütze 20 zugewandten Teil der Welle 73, das Loslager 72 am der Stütze abgewandten Teil. Das Loslager 72 ist an der Welle 73 fixiert und in der Basis 40 in axialer Richtung beweglich angeordnet, um sich bei temperaturbedingten Ausdehnungsschwankungen der Welle 73 mit dieser spannungsfrei mitbewegen zu können. Das Festlager 71 ist derart gestaltet, dass es radiale und axiale Kräfte aufnehmen kann. Das Festlager 71 ist bevorzugt auch dazu ausgelegt, durch das Eigengewicht des Gerätes - bzw. durch das Eigengewicht der gegenüber der Basis 40 um die Stehachse 9 drehbaren Geräteteile - auftretende, insbesondere axiale, Kräfte aufnehmen zu können, sodass das Gerät auch "über Kopf" - das heisst mit der Stütze 20 unter der Basis 40 hängend - eingesetzt werden kann.

Die zweite Fest-Los-Lager-Vorrichtung 70 kann sowohl zusätzlich zur ersten Fest-Los-Lager-Vorrichtung 60 bereitgestellt werden, als auch mit einer anderen Lager-Vorrichtung kombiniert werden.

Es versteht sich, dass diese dargestellten Figuren nur mögliche Ausführungsbeispiele schematisch darstellen. Die verschiedenen Ansätze können ebenso miteinander sowie mit Verfahren und Geräten des Standes der Technik kombiniert werden.

## Patentansprüche

1. Laserbasierte Messvorrichtung zum Messen einer Position eines entfernten Ziels (85), insbesondere ausgestaltet als Lasertracker (1) zum Erfassen der Position und/oder der Ausrichtung eines im Raum bewegbaren Messhilfsmittels (80), aufweisend
● eine eine Stehachse (9) definierende Basis (40),
● eine relativ zur Basis (40) um die Stehachse (9) drehbare Stütze (20),
● eine relativ zur Stütze (20) um eine Kippachse (8) drehbare Teleskopeinheit (10) mit Mitteln zum Aussenden eines Laserstrahls (36),
● eine erste Lager-Vorrichtung (60) mit einer Welle (63), deren Längsachse koaxial mit der Kippachse (8) verläuft, zur Lagerung der Teleskopeinheit (10) an der Stütze (20), und
● eine zweite Lager-Vorrichtung (70) mit einer Welle (73), deren Längsachse koaxial mit der Stehachse (9) verläuft, zur Lagerung der Stütze (20) an der Basis (40),
**dadurch gekennzeichnet, dass**
die erste und/oder die zweite Lager-Vorrichtung (60, 70) als Fest-Los-Lager-Vorrichtung ausgestaltet ist, die ein Festlager (61, 71) und ein Loslager (62, 72) aufweist.

2. Laserbasierte Messvorrichtung nach Anspruch 1, wobei zumindest die erste Lager-Vorrichtung (60) als Fest-Los-Lager-Vorrichtung ausgestaltet ist,
**dadurch gekennzeichnet, dass**
● die Stütze (20) einen ersten Holm (26) und einen zweiten Holm (27) aufweist, wobei die Holme (26, 27) die Teleskopeinheit (10) in Höhe der Kippachse (8) auf zwei Seiten umfangen; und
● das Festlager (61) und das Loslager (62) entlang der Kippachse (8) auf unterschiedlichen Seiten der Teleskopeinheit (10) angeordnet sind, wobei das Festlager (61) im ersten Holm (26) und das Loslager (62) im zweiten Holm (27) angeordnet ist.

3. Laserbasierte Messvorrichtung nach Anspruch 2,
**gekennzeichnet durch**
● Mittel zum Erfassen eines Drehwinkels der Teleskopeinheit (10) relativ zur Stütze (20), die insbesondere eine im zweiten Holm (27) angeordnete Winkelerfassungseinheit (66) zum Erfassen eines Drehwinkels der Welle (63) relativ zur Stütze (20) aufweisen, und/oder
● Antriebsmittel zum motorisierten Drehen der Teleskopeinheit (10) relativ zur Stütze (20).

4. Laserbasierte Messvorrichtung nach Anspruch 3,
**dadurch gekennzeichnet, dass**
die Antriebsmittel einen Motor (65) aufweisen, der dazu ausgestaltet ist, die Welle (63) rotatorisch anzutreiben, um die Teleskopeinheit (10) um die Kippachse (8) zu drehen, wobei der Motor insbesondere
● im ersten Holm (26) angeordnet ist, und/oder
● ein Direct-Drive-Motor ist.

5. Laserbasierte Messvorrichtung nach einem der Ansprüche 2 bis 4,
**dadurch gekennzeichnet, dass**
die Welle (63)
● einen, insbesondere entlang einer Messachse verlaufenden, Durchlass (69) für einen Strahlgang einer optischen Distanzmessvorrichtung aufweist, wobei die Messachse durch eine Emissionsrichtung des Laserstrahls (36) definiert wird und/oder zur Kippachse (8) orthogonal verläuft, oder
● einen ersten Teil (63a) und einen zweiten Teil (63b) aufweist, wobei
● der erste Teil (63a) am Festlager (61) gelagert ist und mit der Teleskopeinheit (10) an deren dem Festlager (61) zugewandten Seite fest verbunden ist; und
● der zweite Teil (63b) am Loslager (62) gelagert ist und mit der Teleskopeinheit (10) an deren dem Loslager (62) zugewandten Seite fest verbunden ist.

6. Laserbasierte Messvorrichtung nach einem der vorangehenden Ansprüche, wobei zumindest die zweite Lager-Vorrichtung (70) als Fest-Los-Lager-Vorrichtung ausgestaltet ist,
**gekennzeichnet durch**
● Mittel zum Erfassen eines Drehwinkels der Stütze (20) relativ zur Basis (40), die insbesondere eine Winkelerfassungseinheit zum Erfassen eines Drehwinkels der Welle (73) relativ zur Basis (40) aufweisen, und/oder
● Antriebsmittel zum motorisierten Drehen der Basis (20) relativ zur Stütze (40).
und/oder **dadurch**, dass.

7. Laserbasierte Messvorrichtung nach Anspruch 6,
**dadurch gekennzeichnet, dass**
die Antriebsmittel einen Motor aufweisen, der dazu ausgestaltet ist, die Welle (73) rotatorisch anzutreiben, um die Stütze (20) um die Stehachse (9) zu drehen, wobei der Motor insbesondere ein Direct-Drive-Motor ist.

8. Laserbasierte Messvorrichtung nach Anspruch 6 oder Anspruch 7,
**dadurch gekennzeichnet, dass**
das Festlager (71) zur Aufnahme axialer Kräfte bestimmt ist, welche in jeder Ausrichtung der Messvorrichtung diejenigen Kräfte übersteigen, die durch das Eigengewicht derjenigen Teile der Messvorrichtung hervorgerufen werden, die gegenüber der Basis (40) um die Stehachse (9) drehbar sind.

9. Laserbasierte Messvorrichtung nach einem der vorangehenden Ansprüche,
**dadurch gekennzeichnet, dass**
das Festlager (61, 71) zur Aufnahme axialer und radialer Kräfte bestimmt ist und
● zwei paarweise angeordnete Lager aufweist, insbesondere in Form von
● zwei einzelnen Wälzlagern oder
● einem Duplex-Spindellagerpaar, und/oder
● einseitig verspannt ist.

10. Laserbasierte Messvorrichtung nach einem der vorangehenden Ansprüche,
**dadurch gekennzeichnet, dass**
das Loslager (62, 72) zur Aufnahme radialer Kräfte bestimmt ist, nicht zur Aufnahme axialer Kräfte bestimmt ist und aufweist
● ein Kugellager mit einem Kugelkäfig;
● ein Gleitlager;
● ein Luftlager; oder
● ein Magnetlager.

11. Laserbasierte Messvorrichtung nach einem der vorangehenden Ansprüche,
**dadurch gekennzeichnet, dass**
die Welle (63, 73)
● am Festlager (61, 71) und am Loslager (62, 72) eine zylindrische Lauffläche aufweist;
● im wesentlichen zylindrisch ist; und/oder
● eine Hohlwelle ist.

12. Laserbasierte Messvorrichtung nach einem der vorangehenden Ansprüche,
**gekennzeichnet durch**
ein Lichtleitersystem zur Übertragung von Licht, insbesondere zur Übertragung eines Laserstrahls, mit mindestens einer lichtleitenden Faser (31, 32) wobei
● mindestens eine Faser (31, 32) mindestens teilweise **durch** die Welle (63, 73) verläuft, und/oder
● eine mindestens teilweise in der Stütze (20) verlaufende erste Faser (31) mit einer mindestens teilweise in der Teleskopeinheit (10) verlaufenden zweiten Faser (32) mittels einer, insbesondere verdrehsicheren, Steckerverbindung (33) verbunden ist.

13. Laserbasierte Messvorrichtung nach einem der vorangehenden Ansprüche,
**dadurch gekennzeichnet, dass**
die Teleskopeinheit aufweist:
● eine optische Distanzmessvorrichtung zur Messung der Distanz zum Messhilfsmittel (80) mit Komponenten eines Interferometers (13) und/oder eines Absolutdistanzmessers (14); und
● eine Messkamera (12), die insbesondere als fokussierbares Vario-Kamerasystem mit variabler Vergrösserung ausgestaltet ist, zur Erfassung von auf dem Messhilfsmittel (80) angeordneten Zielmarkierungen (82), sodass anhand der von der Messkamera (12) aufgenommenen Positionen der Zielmarkierungen (82) die räumliche Ausrichtung des Messhilfsmittels (80) bestimmbar ist.

14. Laserbasierte Messvorrichtung nach einem der vorangehenden Ansprüche,
**dadurch gekennzeichnet, dass**
die Teleskopeinheit aufweist:
● einen positionssensitiven Detektor, insbesondere einen Tracking-Flächensensor, zum Erfassen des von einem Ziel reflektierten Laserstrahls (36), sodass abhängig von einer Position des reflektierten Laserstrahls (36) auf dem Detektor die Ausrichtung des Laserstrahls (36) für eine fortlaufende Zielverfolgung nachführbar ist;
● eine Lokalisierungskamera (54) zur Groblokalisierung des Messhilfsmittels (80); und/oder
● eine Übersichtskamera (56) zur Bereitstellung von Bildern für einen Benutzer.

15. Verwendung einer Fest-Los-Lager-Vorrichtung (60, 70) in einer laserbasierten Messvorrichtung, insbesondere nach einem der Ansprüche 1 bis 14, zur Lagerung einer um eine Kippachse (8) drehbaren Teleskopeinheit (10) an einer Stütze (20) der Messvorrichtung und/oder zur Lagerung einer um eine Stehachse (9) drehbaren Stütze (20) an einer Basis (40) der Messvorrichtung,
**dadurch gekennzeichnet, dass**
die Fest-Los-Lager-Vorrichtung (60, 70) ein Festlager (61, 71), ein Loslager (62, 72) und eine Welle (63, 73), deren Längsachse koaxial mit der Kippachse (8) oder der Stehachse (9) verläuft, aufweist.
